Europäisches Patentamt

European Patent Office

Office européen des brevets

(19)

(11) Veröffentlichungsnummer: **0 139 305**
**A2**

(12) # EUROPÄISCHE PATENTANMELDUNG

(21) Anmeldenummer: **84112857.2**

(22) Anmeldetag: **14.05.80**

(51) Int. Cl.⁴: **A 01 B 3/421**
**A 01 B 3/46**

(30) Priorität: **14.05.79 DE 2919362**

(43) Veröffentlichungstag der Anmeldung:
**02.05.85 Patentblatt 85/18**

(84) Benannte Vertragsstaaten:
**AT BE FR GB NL SE**

(60) Veröffentlichungsnummer der früheren
Anmeldung nach Art. 76 EPÜ: **0 019 275**

(71) Anmelder: **Steigerwald, Rudolf**
**Spitzwegring 7**
**D-8857 Wertingen(DE)**

(72) Erfinder: **Steigerwald, Rudolf**
**Spitzwegring 7**
**D-8857 Wertingen(DE)**

(74) Vertreter: **Prüfer, Lutz H., Dipl.-Phys.**
**Harthauser Strasse 25d**
**D-8000 München 90(DE)**

(54) **Drehpflug mit Abstützvorrichtung.**

(57) Bei Drehpflügen soll ser Wendevorgang vereinfacht und die Einsatzmöglichkeit vergrößert werden.

Zu diesem Zweck wird der Drehpflug primär von einer Abstützvorrichtung (7) getragen und übernimmt oder unterstützt den Drehvorgang.

Fig.1

Croydon Printing Company Ltd.

EP 0 139 305 A2

PATENTANWALT DIPL.-PHYS. LUTZ H. PRÜFER · D-8000 MÜNCHEN 90

Drehpflug mit Abstützvorrichtung

Die Erfindung betrifft einen Drehpflug nach dem Oberbegriff des Anspruches 1. Insbesondere bezieht sich die Erfindung auf eine Abstützvorrichtung zur Entlastung des Pflugvorderteiles an Pflügen, wobei diese Abstützvorrichtung als Kippeinrichtung des Pflugbaumes und/oder als dessen Drehwerkantrieb kombinierbar ist.

Pflüge sollen trotz ihrer hohen Beanspruchung sowohl im Einsatz als auch während des Transportes möglichst leicht, variationsreich in der Bauweise und im Einsatz und entsprechend dem Einsatzzweck mit optimaler Funktion in der Arbeits- und Bedienungstechnik sein.

Die seither bekannten Pflüge und ihre Systeme weisen allerdings einige Nachteile auf. Bei Anbaudrehpflügen ist bis auf wenige Ausnahmen der Pflugbaum während der Drehung zur Drehachse fest fixiert, so daß einerseits große Schwungmomente frei werden und sinngemäß große Drehmomentkräfte erforderlich sind, um den Pflugbaum wieder in seine Arbeitsstellung zu drücken und andererseits der Drehradius an der Peripherie der hinteren Pflugteile relativ groß wird, was zu Drehstörungen und Beschädigungen führt, wenn der Pflug den Boden berührt. Diese schlechten Eigenschaften übertragen sich auf das Aushubgestänge des Schleppers und somit des Schleppers selbst und können auch hier Beschädigungen hervorrufen.

Bei bereits bekannten Systemen ist die Wendewelle, bzw. deren Lagerung die einzige Verbindung zwischen Pflugvordergestell und Pflughinterteil. Die Beanspruchung dieser Wendewelle ist deshalb sehr groß und muß in der Herstellung aufwendig und teuer gebaut werden. Trotzdem sind Beschädigungen und Brüche an dieser Stelle keine Seltenheit. Außerdem wird die Wendewelle durch den senkrecht stehenden Drehwerkszylinder während dem Nulldurchgang noch zusätzlich belastet.

Die bisher bekannten Anbaudrehpflüge konnten wegen ihrer Drehwerksantriebe kannten Anbaudrehpflüge konnten wegen ihrer Drehwerksantriebe nicht, wie bei den Beetpflügen (Einwegpflügen) bekannt, mit einer Abstützung zwischen Pflugbock und Pflugbaum ausgerüstet werden. Dies hat zur Folge, daß die gesamte Belastung des hinteren Pflugteiles von der Wendewelle aufgenommen werden muß und trotz aufwendiger und somit teurer Bauweise häufig der Übergangsbereich der Wendewelle zum Pflugbock die Schwachstelle bezüglich Beschädigung oder Bruch ist. Des weiteren ist die Anzahl der Pflugkörper bei Anbaudrehpflügen zum Teil wegen des obigen Grundes, aber zum großen Teil auch wegen des hohen Kippmomentes des Pflugschwerpunktes zur Schlepperhinterachse, in der Praxis begrenzt. So können in der Regel nur vierscharige und in Sonderfällen fünfscharige Anbaudrehpflüge vom Schlepper getragen werden. Bereits bei größeren Vierschar-Anbaudrehpflügen ist es keine Seltenheit, daß beim Einsatz in schweren Böden sogar große Schlepper mit Allradantrieb aufbäumen. Damit wird der gesamte Antrieb auf die Hinterachse verlagert, wofür sie nicht gebaut ist. Hierbei kann es zu Schäden im Differential oder Getriebe kommen, oder der Reifen dreht sich auf der Felge durch. Selbst wenn es nicht zu sofortigen Schäden des Hinterachsantriebes am Schlepper führt, ist der Verschleiß der relativ großen und teuren Hinterradreifen speziell bei Böden mit Steinbesatz sehr groß. Bei zu starker Entlastung der angetriebenen Vorderräder wird der Sinn und Zweck des allradgetriebenen Schleppers in Frage gestellt.

Anbaupflüge bekannter Art weisen bei welligem Gelände und beim Ausheben bzw. Einsetzen noch Nachteile auf, indem durch die nahezu parallele Führung des Aushubgestänges kein Knickwinkelausgleich vorhanden ist. Es wurden hierfür bereits Lösungen bekannt, konnten sich aber wegen ihres relativ hohen technischen Aufwandes gegenüber dem erzielten Nutzen in der Praxis nicht durchsetzen. Bei Anbaudrehpflügen ist dieser Knickausgleich bisher nur über Hydraulikzylinder möglich, die anstatt dem Oberlenker (obere Gelenkverbindung zwischen Schlepper und Pflugbock) eingesetzt sind (DT-OS 2 345 023). Außerdem haben alle bekannten Knickausgleichsysteme den Nachteil, daß man den Knickausgleich entweder ständig mit der Hand nachregeln, oder der Knickausgleich-Zylinder in Schwimmstellung sein muß. Ein Anbaupflug mit Schwimmstellung dieses Zylinders ist jedoch widersinnig, weil die für den Anbaupflug spezifische Übertragung der Tragkraft auf den Schlepper verloren geht.

Die Überbelastung des Schleppers tritt nicht nur bei eingesetztem, sondern auch bei ausgehobenem Anbaupflug auf. Durch den zwangsläufig großen Abstand des Pflugschwerpunktes zur Schlepperhinterachse bauen sich große Schwungmomente auf, wenn Bodenunebenheiten überfahren werden. Diese Kräfte können die statischen um ein vielfaches überschreiten und führen deshalb zu starker Überbelastung sowohl der Wendewelle als auch des gesamten Schlepperhubgestänges einschließlich der Hubhydraulik. Bei längeren Transportfahrten erhöht sich daraufhin die Temperatur des Hydrauliköles, die Viskosität nimmt ab und ein ständiges Nachregeln ist die Folge, weil die Lecköverluste ständig größer werden. Die Öltemperatur nimmt deshalb noch mehr zu. Dieser Regelkreis kann sich so nachteilig auswirken, daß sich Öldampfblasen bilden und die Steuerkanten im Regelventil bzw. die Hydraulikpumpe beschädigt werden. Eine Reparatur ist somit unumgänglich.

Im Straßenverkehr wirken sich die langen Abmessungen von größeren Pflügen besonders hinderlich und zum Teil gefährlich aus. Durch den großen Schwerpunktabstand der Pflüge zur Schlepperhinterachse wird die Vorderachse stark entlastet,

0139305

und die Lenkfähigkeit des Schleppers kann nur über Frontgewichte wieder verbessert werden. Hier sind jedoch Grenzen gesetzt, da Frontgewichte einen vorgeschriebenen Gewichtswert und die Hinterachslast einen maximal zulässigen Belastungswert nicht überschreiten dürfen. Die langen Abmessungen der freigetragenen Anbaupflüge haben im Straßenverkehr schon zu zahlreichen Unfällen geführt, speziell beim Abbiegen von oder in die Straße.

Aufgabe der Erfindung ist es, einen Drehpflug der eingangs beschriebenen Art zu schaffen, durch den die Anwendung und Ausbildung von Drehpflügen wesentlich verbessert wird und die Anzahl der Pflugkörper bei Anbaupflügen gegenüber bekannten Pflügen erhöht werden kann. Insbesondere soll ein Drehpflug mit einer Abstützvorrichtung geschaffen werden, die auch beim Drehvorgang angelenkt ist und somit eine ständige Entlastung der Wendewelle bzw. des Pflugvorderteiles und Drehantriebes erlaubt.

Es sollen die Vorteile des Anbaupfluges gegenüber dem Aufsattelpflug - hohe Wendigkeit und günstiger Anschaffungspreis - mit den Vorteilen des Aufsattelpfluges gegenüber dem Anbaupflug - gute Anpassung des Pfluges bei welligem Gelände, gute Einsetz- und Aushubeigenschaften am Feldrand (schräges Ein- und Ausfahren der Pflugkörper) und günstige Transporteigenschaften bezüglich Gewichtsverlagerung auf den Schlepper und gute Kurvenfahrt - kombiniert werden. Darüberhinaus soll die bei eingesetztem Pflug zu übertragende Tragkraft auf den Schlepper entsprechend des verwendeten Schleppers optimal einstellbar sein.

Diese Aufgabe wird durch einen Drehpflug der eingangs beschriebenen Art gelöst, welcher gemäß der Erfindung dadurch gekennzeichnet ist, daß entweder bei einer starren Verbindung zwischen Pflugbock und Pflugkopf zwischen Pflugbock und Pflugkopf das Verbindungselement mit einem Kraftspeicher oder einem Kraftantrieb, die in Richtung der Längsachse des Verbindungselementes wirken, vorgesehen ist, oder daß ein Kipplager waagrecht und quer zur Achse der Wendewelle zwischen Pflugbock und Pflugbaum und das Verbindungselement zwischen dem Pflugbock und dem aus Pflugkopf, Wendewelle und Pflugbaum bestehenden kippbaren Pflugteil vorgesehen ist.

Es wird eine Abstützvorrichtung zur Entlastung des Pflugvorderteiles an Pflügen, vorzugsweise an Anbaudrehpflügen, geschaffen, die gemäß der Erfindung dadurch gekennzeichnet ist, daß mindestens ein Verbindungselement zwischen dem Pflugbock und/oder dem Pflugkopf und entweder der Drehwelle oder dem Pflugbaum verbunden oder angelenkt ist. Entsprechend des Verwendungszweckes ist ein Kipplager waagrecht und quer zur Drehwellenachse zwischen Pflugbock und Pflugkopf vorhanden. Bei Verwendung eines hydraulischen Kippzylinders ist diesem ein Hydro-Speicher oder/und ein Drosselrückschlagventil vorgeschaltet. Dem hydraulischen Kippzylinder ist bei Verwendung eines zusätzlichen Dreh-werk- oder Schwenk-Drehzylinders eine hydraulische Schalteinrichtung zwischengeschaltet, die den Kippvorgang nach einem bestimmten Kippweg entweder unterbricht und den Drehvorgang einleitet oder den Drehvorgang parallel oder synchron zuschaltet und umgekehrt. Ein hydraulischer Kippzylinder kann gleichzeitig als Drehwerk verwendet werden, indem dieser einerseits am Pflugbock oder Pflugkopf symmetrisch zur Wendewellenhöhenachse und andererseits am Pflugbaum symmetrisch und asymmetrisch zur Wendewellenlängsachse angelenkt ist. Die Abstützvorrichtung am Pflugbaum kann über einen Zwischenhebel oder in einem Langloch so angelenkt sein, daß der Anlenkpunkt asymmetrisch zur Wendewellenquerachse und entsprechend der Wenderichtung entweder oberhalb oder unterhalb der Symmetrieachse des Pflugbaumes ist.

Dadurch wird erreicht, daß durch die Abstützvorrichtung, die ihrem Verwendungszweck entsprechend entweder als einfache Strebe oder Strebe mit Ausgleichsfeder oder Hydraulikzylinder ausgebildet sein kann, stets der Pflugkopfbereich, ins-besondere der Übergang der Wendewelle vom drehbaren Teil zum Pflugkopf entscheidend entlastet wird. Es kann deshalb dieser Bereich preisgünstiger gebaut bzw. die gefürchteten Schäden oder Brüche können vermindert oder ganz ausgeschaltet werden. Die Kippeinrichtung ermöglicht insbesondere bei Ver-wendung eines hydraulischen Kippzylinders als Abstützvor-richtung ein gutes Einsetzen bzw. Ausheben des Anbaudreh-pfluges am Feldrand, indem die Pflugschare einzeln hinter-

einander einsetzen bzw. ausfahren. Die unerwünschten ungepflügten Dreiecke am Feldrand, die sich besonders beim Querpflügen des Feldrandes nachteilig auswirken, entfallen. Das schräge Einfahren der Pflugschare hat noch den zusätzlichen Vorteil, daß der Einzugswinkel der Pflugschare steiler wird, was bei schweren Böden besonders wichtig ist, damit der Pflug schneller seine Soll-Arbeitstiefe erreicht.

Die Kippeinrichtung ist mit einem Wendewerk kombinierbar und erlaubt ein Hochkippen des Pflugbaumes bis in den Bereich der Senkrechten. Es erhöht die Wendigkeit des Schleppers beim Wenden bzw. Transport entscheidend. Die Lenkfähigkeit des Schleppers steigt, das Querschwungmoment, das durch Unebenheiten oder Kurvenfahrt hervorgerufen wird, sinkt, das gefährliche Ausschwenken des Pflugbaumes, speziell bei Straßenfahrt, entfällt.

Bei Verwendung eines Kippzylinders und eines vorgeschalteten Hydro-Speichers kann die gewünschte oder erforderliche Übertragung der Tragkraft vom eingesetzten Pflug auf den Schlepper genau vorbestimmt werden. Der Anbaupflug paßt sich jeder Bodenunebenheit ohne hydraulische Nachregelung an und erreicht somit die Vorteile eines Anhänge- bzw. Aufsattelpfluges. Der Schlepper gräbt sich während des Pflügens nicht mehr ein, was bei schweren Böden speziell im Moment des Anhebens des Anbaupfluges durch die Regelhydraulik der Fall sein kann. Die Achslastverteilung des Schleppers bleibt entsprechend der eingestellten Tragkraftübertragung nahezu konstant, so daß allradgetriebene Schlepper ihre optimale Zugkraft beibehalten. Außerdem ist für das Heckstützrad eine Überbelastung, wie dies bisher noch möglich war, wenn z.B. der Schlepper mit der Hinterachse in eine Vertiefung fährt, auszuschließen.

Ein Drosselrückschlagventil, speziell in Kombination mit einem Hydro-Speicher, dämpft die Längsschwungmomente des Anbaupfluges.

**Die Verwendung des Kippzylinders als gleichzeitiger Drehwerkantrieb** ermöglicht eine einfache und preisgünstige Bauweise, speziell für Standardpflüge, und zwar mit dem besonderen Merkmal, daß mit einem einzigen Hydraulikzylinder die wesentlichen Vorteile der bereits beschriebenen Kippeinrichtung und ein Drehwerkantrieb erreicht werden. Ein weiterer Vorteil ist bei Anlenkung des Kippzylinders oberhalb der Wendewelle, daß der Drehantrieb nicht von der Förderleistung der Hydraulikpumpe des Schleppers abhängt. Das Drehwerk braucht deshalb nicht mehr nach den häufig recht unterschiedlichen Förderleistungen der Schlepperhydraulik ausgelegt werden. Die Drehkinematik bleibt stets konstant, gleichgültig wie der Pflug (Pflugschwerpunkt zur Wendewelle) eingestellt ist.

Die hydraulische Schaltkombination zwischen Kipp- und Drehwerkzylinder ermöglicht eine schnelle und fehlerfreie Bedienung. Entsprechend der gewählten oder vorhandenen hydraulischen Anschlußmöglichkeit am Schlepper wird ohne umschalten zu müssen der Pflugbaum gekippt und in die erforderliche Stellung gedreht. Das verhindert einerseits Fehlschaltungen, d.h. das vordere obere Schar kann durch zu hohes Kippen des Pflugbaumes nicht den Schlepper beschädigen, und andererseits kann sich der Schlepperfahrer voll auf sein Fahrzeug konzentrieren. Dies ist gerade am Feldrand wichtig, da der Schlepper gleichzeitig gewendet wird.

Die wegabhängige Schaltkombination hat gegenüber der Überdruckschaltung den Vorteil, daß sich keine Druckspitzen in der Hydraulikanlage aufbauen und keine ruckartigen Bewegungswechsel ausgelöst werden.

Falls eine hydraulische Umschaltung nach halbem Drehvorgang des Pflugbaumes und eine Totpunkt-Dreh-Hilfseinrichtung erforderlich ist, kann diese auf einfache Art und Weise durchgeführt werden. Diese Dreh-Hilfseinrichtung ist bei jedem System einbaubar, das mit einer Abstützvorrichtung arbeitet, die am drehbaren Teil des Hinterpfluges angelenkt ist.

Für die sichere Funktion der Dreh-Hilfseinrichtung ist es unerheblich, ob der Schwerpunkt des Pflugbaumes zuerst angehoben wird und sich dann über die Eigenenergie weiterdreht, oder umgekehrt.

Die Abstützvorrichtung ist vorzugsweise am Pflugbock oder Pflugkopf symmetrisch zu der Wendewellenhöhenachse und am Pflugbaum symmetrisch und asymmetrisch zu der Wendewellenlängsachse angelenkt. Ein Federelement ist symmetrisch einerseits am Pflugbaum und andererseits an der Drehwelle angreifend ausgebildet. Es kann ein Dämpfungszylinder dem Federelement parallelgeschaltet am Pflugbaum und an der Drehwelle angreifend vorgesehen sein.

Weitere Merkmale und Zweckmäßigkeiten der Erfindung ergeben sich aus der Beschreibung von Ausführungsbeispielen anhand der Figuren. Von den Figuren zeigen:

Fig. 1     im Aufriß einen Anbaudrehpflug mit verschiedenen hydraulischen Abstützvorrichtungen, Kippeinrichtung, Dreh-Hilfseinrichtung (und Front-Hilfsstützrad in Arbeitsstellung);

Fig. 2     im Aufriß einen Anbaudrehpflug mit hydraulischer Kippeinrichtung und verschiedene mechanische Abstützvorrichtungen in Arbeitsstellung;

Fig. 3     im Grundriß einen Anbaudrehpflug, kombiniert mit Schwenk-Vorrichtung, hydraulischer Abstützvorrichtung, Kippeinrichtung und Dreh-Hilfseinrichtung;

Fig. 4     wie Fig. 3, jedoch im Aufriß und nach halber Drehung des Pflugbaumes;

Fig. 5     wie Fig. 4, jedoch im Grundriß;

Fig. 5a und 5b     Varianten der Dreh-Hilfseinrichtung;

Fig. 6     im Aufriß einen Anbaudrehpflug wie in Fig. 1, jedoch in Ausfahrtstellung aus der Furche;

Fig. 7      wie Fig. 6, jedoch in Kippstellung und unmittelbar vor der Drehung;

Fig. 7a, b und c      Varianten von hydraulischen Schaltkombinationen (Schaltbild) in Stellung des Pflugbaumes wie Fig. 7;

Fig. 8      wie Fig. 7, jedoch in maximal gekippter und ausgehobener Stellung des Pfluges mit halber Drehung des Pflugbaumes;

Fig. 9      wie Fig. 6, jedoch in Einfahrstellung in die Furche;

Fig. 9a, b, c      wie Fig. 7a, b, c, jedoch in Arbeitsstellung des Pfluges;

Fig. 10      im Aufriß einen Anbaudrehpflug, kombiniert mit hydraulischer Abstützvorrichtung und zusätzlichem Abstützzylinder;

Fig. 10a      das Kippmomentdiagramm zu Fig. 10;

Fig. 11      im Aufriß (Schnitt) den Pflugbock und Pflugkopf von Fig. 10;

Fig. 12      wie Fig. 10, jedoch mit starrer Anlage anstatt dem zusätzlichen Abstützzylinder und nach halber Drehung;

Fig. 12a      das Drehdiagramm zu Fig. 12;

Fig. 13      im Seitenriß (Schnitt) den Pflugbock und Pflugkopf von Fig. 12;

Fig. 14      Variante von Fig. 8, jedoch mit zusätzlichem Abstützzylinder;

Fig. 14a und 14b      Varianten von Fig. 5a und 5b für Fig. 14 bis Fig. 18;

Fig. 15      im Aufriß und

Fig. 16      im Grundriß von Fig. 14;

Fig. 17 und 18      Darstellungen der Erfindung im Detail.

- 10 -

0139305

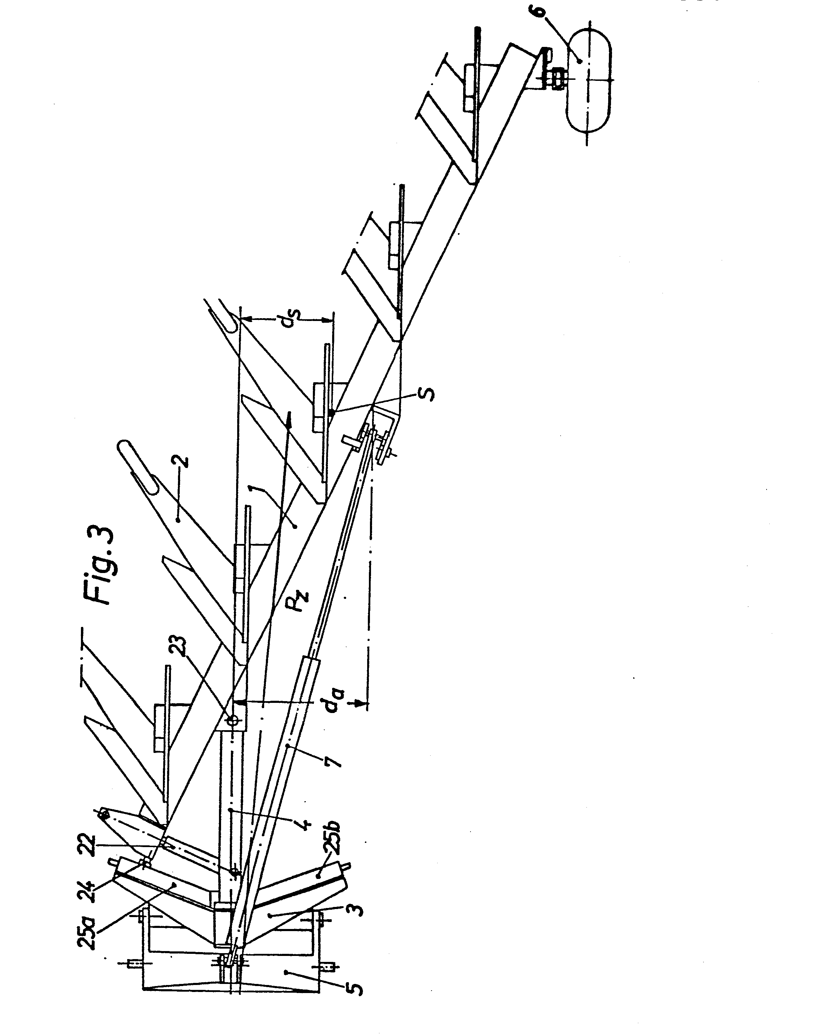

Der Pflugbaum 1 ist am Ende der Drehwelle 4 über ein Lager 23 parallel zu den Pflugkörpern 2 schwenkbar gelagert und liegt am vorderen Ende des Pflugbaumes 1 über eine Rolle 24 in einer quer und leicht v-förmig zur Wendewelle 4 verlaufenden U-förmigen Führung 25a, b und 26 und wird von einem waagrecht liegenden Hydraulikzylinder 22, der einerseits in der Wendewelle 4 und andererseits im Pflugbaum 1 am vorderen Ende gelagert ist, in seiner Arbeitsstellung gehalten oder gegen einen Anschlag 27 gespreizt. Es entsteht bei anliegendem Pflugbaumvorderteil am Anschlag 27 . ein Kräftedreieck, das die Zugkraft $P_z$ des Pfluges gut auf den Pflugkopf 3 überträgt, so daß die auf Querbiegung beanspruchte Wendewelle 4 im gefährdeten Übergangsbereich zum Pflugkopf 3 entlastet wird (Fig. 3). Zur Drehung des Pflugbaumes 1 ist der Hydraulikzylinder 22 (Fig. 3) auf Zugkraft zu beaufschlagen.

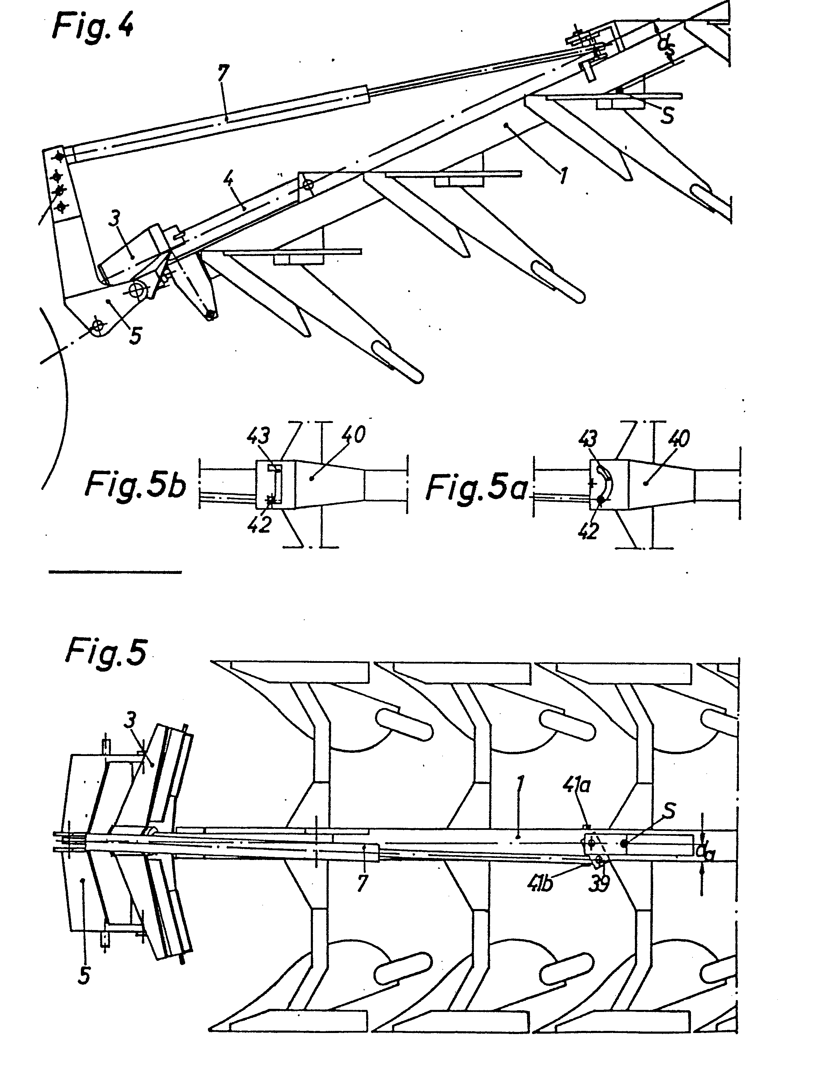

Für Standardpflüge eignet sich die mechanische Abstützvorrichtung 18, a; 19, a; 20, a; 21, a, die entsprechend dem Verwendungszweck entweder zwischen Pflugbock 5 und Drehwelle 4 oder Pflugbock 5 und Pflugbaum 1 und entsprechend der Drehrichtung des Pflugbaumes 1 entweder oberhalb oder unterhalb der Drehwelle 4 angelenkt sein kann. In jedem Fall wird die Drehwelle 4 und der Übergangsbereich auf den Pflugkopf 3 oder Pflugbock 5 entlastet. Mit den vorgesehenen Spannschlössern 18, a; 19 und a ist die gewünschte Entlastungskraft einstellbar. Für konventionelle Drehsysteme eignen sich z.B. die Abstützvorrichtungen nach 18 und 18a. Wird die Abstützvorrichtung 21 und a am Pflugbaum 1 angelenkt und ist kein Kippausgleich zwischen Pflugkopf 3 und Pflugbock 5 vorhanden, ist eine Ausgleichsfeder 20 oder 20a erforderlich, da unterschiedliche Schwenk-Drehradien auftreten. Diese sind gegenüber einem konventionellen Drehsystem jedoch relativ klein (Fig. 4). Eine Abstützvorrichtung mittels eines Hydraulikzylinders 7, a; 10 und a läßt sich beispielsweise kombinieren als Unterstützung des Drehwerkes, als alleiniger Drehwerksantrieb und zusätzlich als Kippeinrichtung bzw. Bodenausgleich des Pflugbaumes 1.

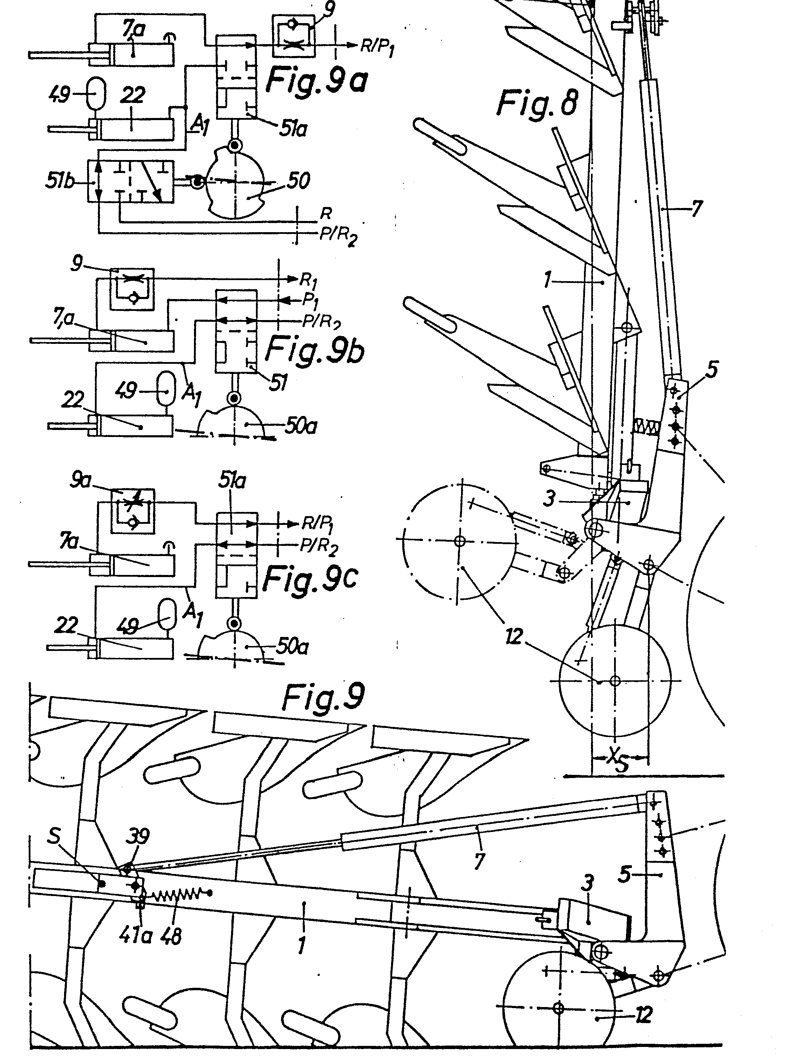

Durch die asymmetrische Anlenkung des Hydraulikzylinders 7 oder a am Pflugbaum 1 entsteht eine Drehantriebsunterstützung $d_a$, siehe Fig. 3. In Verbindung mit einer Dreh-Hilfseinrichtung kann, falls erforderlich, die Totpunktlage nach halbem Drehvorgang überwunden werden, so daß der Pflugbaum 1 nicht mehr in seine bisherige Arbeitsstellung zurückdrehen kann. Der Hydraulikzylinder 7 oder 7a ist am Pflugbaum 1 über einen Zwischenhebel 39, dessen Lagerachse am Pflugbaum 1 symmetrisch und quer zur Zugrichtung des Hydraulikzylinders 7 oder 7a ist, schwenkbar angelenkt. Der Zwischenhebel 39 liegt entsprechend dem Drehvorgang an den Anschlägen 41a oder 41b an, so daß der Hydraulikzylinder 7 oder 7a zum Pflugbaum 1 asymmetrisch angelenkt ist. Nach halber Drehung des Pflugbaumes 1, wenn der Pflugbaumschwerpunkt S in der Totpunktlage ist, verbleibt ein Restantriebsmoment $d_a$ (Fig. 5), das die Totpunktlage sicher überwindet. Nach beendigter Drehung und während des Einsetzens des Pfluges wird im Hydraulikzylinder 7 oder 7a die Kraft zu Null, und die Feder 48 schwenkt den Zwischenhebel 39 in die Symmetrieachse des Pflugbaumes 1. Durch das Eigengewicht des Hydraulikzylinders 7 oder 7a senkt sich der Zwischenhebel 39 aus seiner waagrechten Lage weiter, so daß nach erneuter Belastung des Hydraulikzylinders 7 oder 7a der Zwischenhebel 39 gegen den Anschlag 41a entweder gezogen (Fig. 9) oder gedrückt wird (Anlenkung nach Fig. 15). Der Pflug kann jetzt in die entgegengesetzte Richtung erneut gedreht werden.

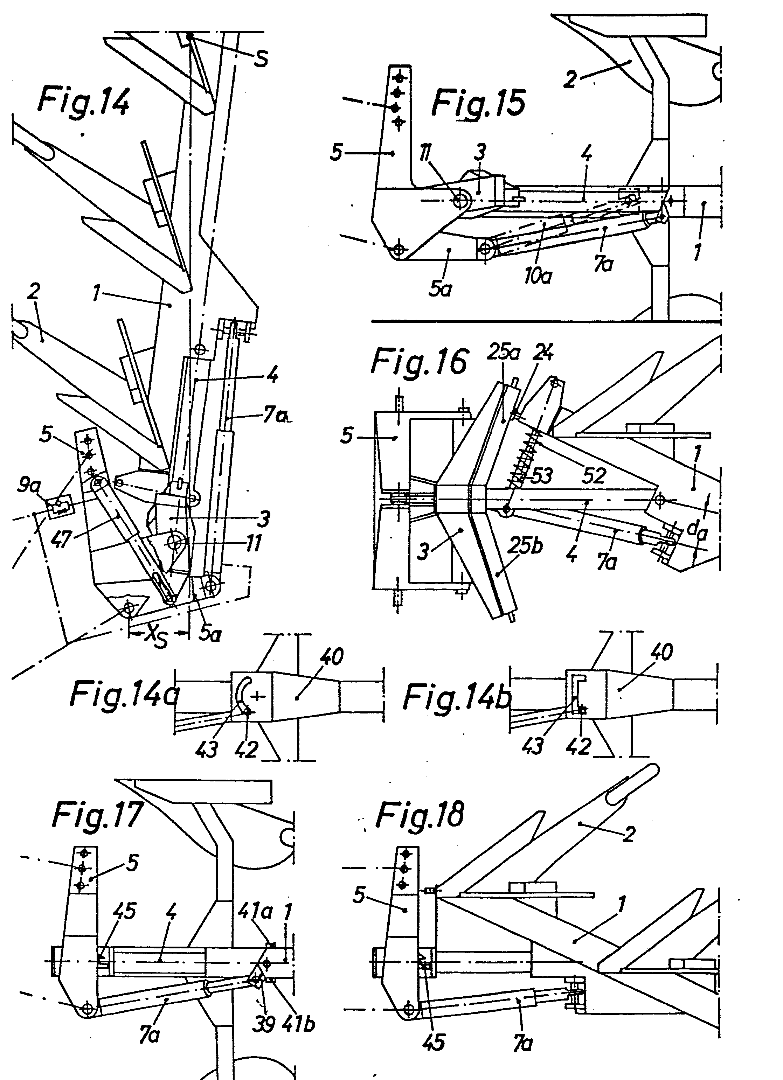

Die gleiche Wirkung der Dreh-Hilfseinrichtung wird erreicht, wenn der Hydraulikzylinderanlenkbolzen 42 in einem kreisförmigen oder u-förmigen Langloch 43 geführt und der Hydraulikzylinder 7 oder 7a durch eine Feder 48 entsprechend der Anlenkungsart des Hydraulikzylinders 7 oder 7a entweder herausgezogen oder zusammengeschoben wird - siehe Fig. 5a und 5b oder 14a und 14b.

Bei nicht kippbarem Pflugbaum 1 und beispielsweise unter der Drehwelle 4 angelenktem Hydraulikzylinder 7a fällt nach der Druckentlastung des Hydraulikzylinders 7a und Entriegelung der Pflugbaumschwerpunkt S aufgrund seiner Eigenenergie nach unten. Dadurch wird der Hydraulikzylinder 7a eingeschoben, und nach Umschaltung auf Druck dreht der Pflugbaum 1 weiter. Eine Dreh-Hilfseinrichtung kann auch hier das Zurückdrehen des Pflugbaumes 1 in seine alte Arbeitsstellung verhindern. Bleibt der Hydraulikzylinder 7a während der Arbeit unter Druck, wird die Drehwelle 4 auf Längsbiegung entlastet.

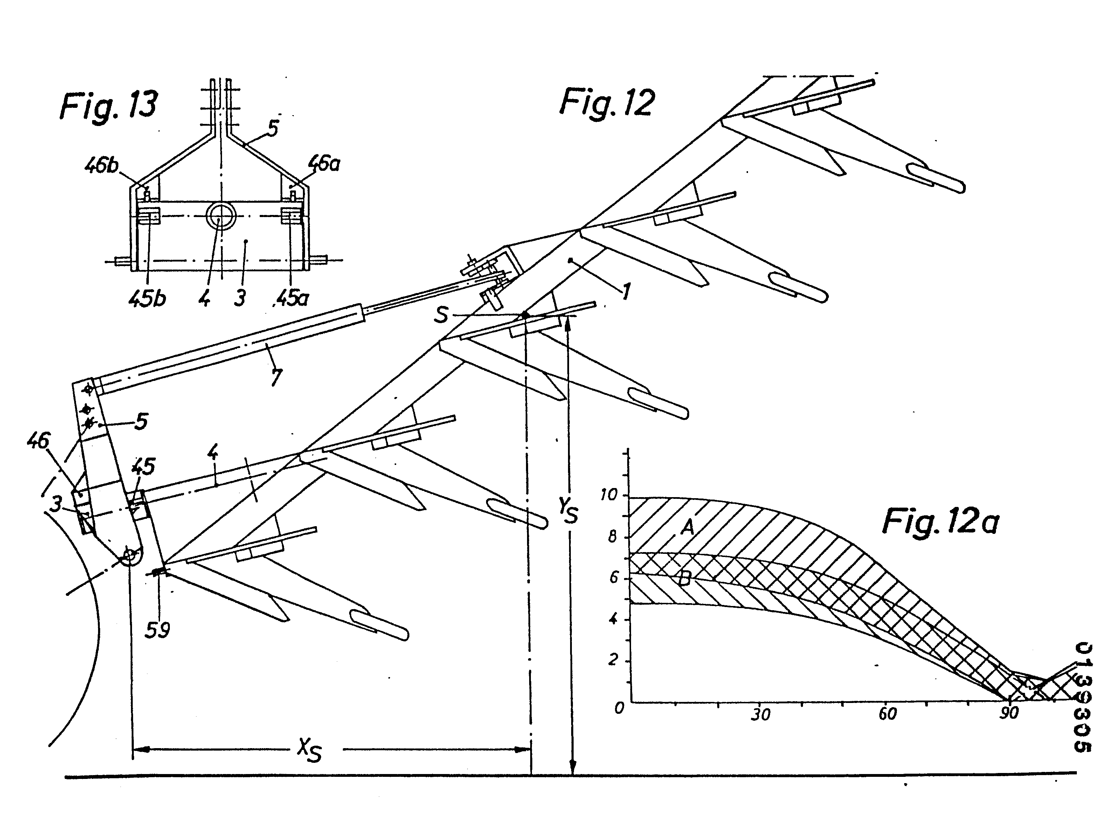

Der gleiche Drehantrieb ist bei der Anlenkung des Hydraulikzylinders 7 über der Wendewelle 4 erreichbar, mit dem Unterschied, daß der Pflugbaumschwerpunkt S zuerst hochgedreht wird und sich dann durch seine Eigenenergie absenkt (nicht abgebildet, jedoch ähnlich Fig. 12 ).

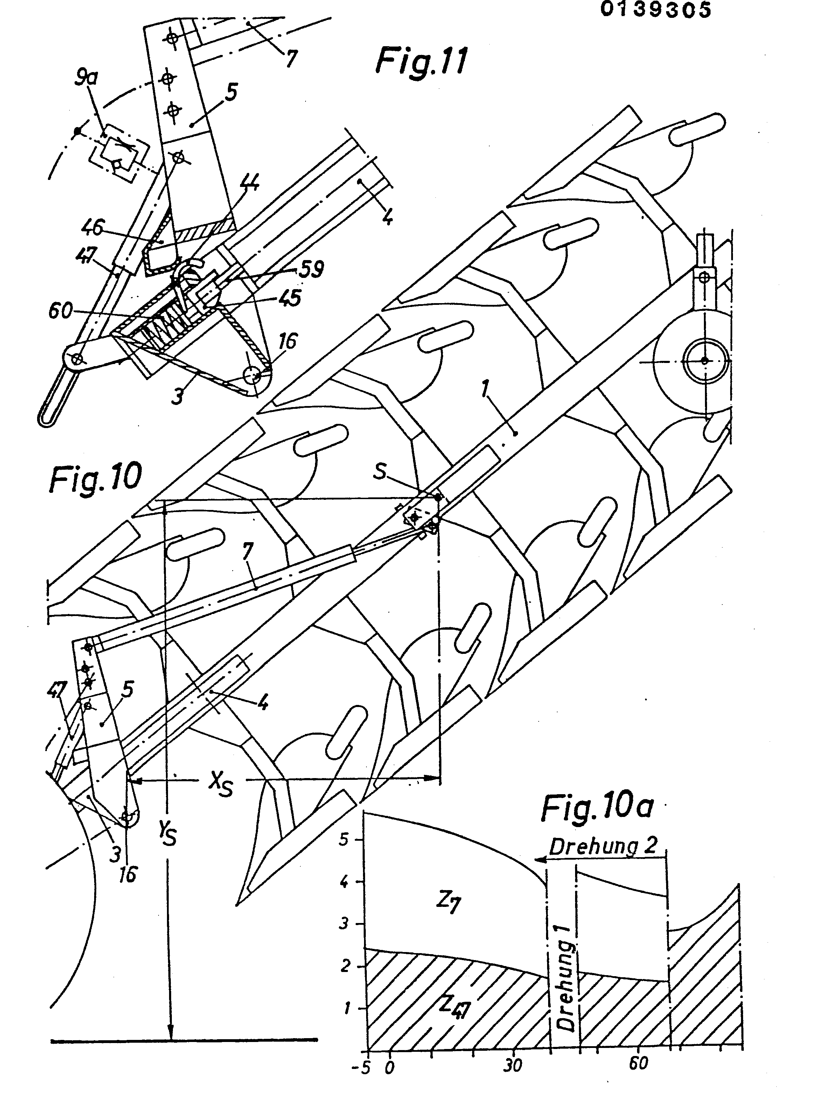

Als Kombination der Abstützvorrichtung zwischen Drehantrieb - ohne Schwenkmöglichkeit - und Kippeinrichtung mit einem einzigen Hydraulikzylinder 7 sei ein Beispiel nach Fig. 10 bis 11 beschrieben.

Der Pflugbaum 1 mit Drehwelle 4 und Pflugkopf 3 ist entweder über ein eigenes Kipplager 11 oder der Zugachse 16 kippbar. Ein auf Zug beanspruchter Hydraulikzylinder 7 ist oberhalb der Wendewelle 4 einerseits am Pflugbock 5 und andererseits am Pflugbaum 1, möglichst mit einer Dreh-Hilfseinrichtung kombiniert, angelenkt. Die Zugkraft im Hydraulikzylinder 7 wird von dem Kippmoment des Schwerpunktes S bestimmt. Diese Zugkraft ist maßgebend für das Antriebs-Drehmoment zur Drehwelle 4. Bei entsprechend ausgewogener Anlenkung des Hydraulikzylinders 7 wird das Antriebs-Drehmoment $d_a$ größer sein als das Schwerpunkts-Drehmoment $d_s$ (Fig. 3 ). Nach Lösen der Dreharretierung 45 dreht der Pflugbaumschwerpunkt S nach oben, gleichzeitig kippt der Pflugbaum 1 im Lager 16 entsprechend dem Radius $d_a$ zurück. Obwohl der Schwerpunkt S nach oben gezogen wird, ist es wegen dem Zurückkippen des Pflugbaumes 1 im Prinzip eine Falldrehung, und die Förderleistung der Schlepperhydraulik kann trotz gleichzeitigem Ölzulauf im Hydraulikzylinder 7 keinen direkten Einfluß auf den Drehvorgang haben. Der Pflugbaum 1 ist in der halb gedrehten Stellung jetzt in die senkrechte Lage kippbar, so daß sich für den Schlepper günstigere Achslastverteilungen ergeben. Der zweite Teil der Drehung erfolgt nach dem Abkippen des Pflugbaumes 1 in die Arbeitslage, indem der Pflugkopf 3 an einem am Pflugbock 5 befestigten Anschlag 46 zum Anliegen kommt. Das hiermit aufgehobene Kippmoment läßt den über der Wendewelle 4 liegenden Schwerpunkt S um die Wendewelle 4 drehend absinken, bis der Zapfen 59 in die Dreharretierung 45 einrastet. Der Pflug ist einsatzbereit.

Fig. 12 a zeigt schematisch den Ablauf des Dreh-Antriebsmomentes (schraffiert), aufgetragen über der Drehwinkel, von Beginn der Drehung bis über die Totpunktlage hinaus. Das dargestellte Dreh-Antriebsmoment ist die Differenz zwischen dem Drehmoment durch den Hydraulikzylinder 7 und dem Schwerpunktmoment S. Die Fläche A ist die Drehung bei waagrechter Kipplage des Pflugbaumes 1 und die Fläche B bei einem Kippwinkel von ca. 45°. Diese unterschiedlichen Werte der Antriebsmomente haben den Vorteil, daß sie einerseits relativ klein ausgelegt werden können und andererseits bei einer asymmetrischen Schwerpunktsverlagerung, z.B. durch einseitig hängengebliebenes Erdreich an den Pflugkörpern 2, oder durch das Gelände hervorgerufene Querneigung des Pfluges, dieser durch ein Tieferkippen trotzdem sicher dreht. Die Drehgeschwindigkeit des Pflugbaumes 1 kann somit durch seine Kippstellung bestimmt werden. Damit der Kipp-Dreh-Kipp-Vorgang in einem Arbeitsgang durchführbar ist und die Bedienungsperson sich voll auf das Wenden des Schleppers konzentrieren kann, erfolgt die Drehauslösung des Pflugbaumes 1 automatisch (Fig. 11). Erreicht der Pflugkopf 3 einen vorbestimmten Kippwinkel, wird die Drehwerkarretierung 45 durch einen Umlenkhebel 44, der an einem am Pflugbock 5 befestigten Anschlag 46 anliegt oder vorbeistreift, mit zunehmendem Kippweg zurückgeschoben und entriegelt. Die Verriegelung erfolgt über eine Auflaufschräge an der Arretierung 45 und wird durch den Arretierungszapfen 59 zurückgeschoben. Für lange und schwere Anbaudrehpflüge ist ein zweiter Hydraulikzylinder 47 vorgesehen, der zwischen Pflugbock 5 und Pflugkopf 3 angelenkt und hydraulisch mit dem Hydraulikzylinder 7 verbunden ist. Wird der Hub des zweiten Hydraulikzylinders 47 auf ca. den halben Kippweg des Pflugbaumes 1 begrenzt und die Anlenkung für den weiteren Kippweg in einem Langloch geführt und ein Drosselrückschlagventil 9a vorgeschaltet, erfüllt er die gleiche Aufgabe wie der starre Anschlag 46, mit dem Unterschied, daß die Kipp-Dreh-Kipp-Bewegung nicht mehr hintereinander, sondern parallel erfolgt. Die Drehgeschwindigkeit ist durch die Drossel im Drosselrückschlagventil 9a einstellbar. Das Diagramm in Fig. 10a stellt die Kippmomentverteilung der beiden Hydraulikzylinder 7 und 47 schematisch dar. Unter der Bezeichnung "Drehung 1" ist die erste Drehhälfte während des Hochkippens und unter "Drehung 2" die zweite Drehhälfte während des Abkippens des Pflugbaumes 1 zu verstehen. Der zweite Hydraulikzylinder 47 hat nicht nur die Aufgabe, die Drehung zu unterstützen bzw. zu ermöglichen, sondern entlastet den Hydraulikzylinder 7 in der höher beanspruchten ersten Kipphälfte des Pflugbaumes 1. Dies wirkt sich besonders vorteilhaft für den Kippausgleich des eingesetzten Pfluges bei welligem Boden aus.

Eine Variante zu der oben beschriebenen Kombination ist in Fig. 14 bis 15 dargestellt: Der Hydraulikzylinder 7a ist hier unterhalb der Drehwelle 4 am Pflugbock 5a und Pflugbaum 1 angelenkt. Da der Pflugbaum 1 mit den vorderen Pflugscharen 2 über die Drehwelle 4 gedreht werden muß, damit der Hydraulikzylinder 7a unter der Drehwelle 4 durchdrehen kann und der Pflugbaum 1 nach halber Drehung nicht nach oben kippbar ist (siehe Fig. 18), ist als Kombination ein Schwenk-Drehsystem gewählt. In Verbindung mit dem zweiten Hydraulikzylinder 47 kann der Hydraulikzylinder 22 (Fig. 3) eingespart und dafür eine Druckfeder 52 eingesetzt werden.

Bei hydraulischer Verbindung der Hydraulikzylinder 47 und 7a wird die Schwenk-Drehbewegung erst eingeleitet, wenn der Hub des Hydraulikzylinders 47 zu Ende ist - nach ca. halbem Kippweg des Pflugbaumes 1. Der Druck im Hydraulikzylinder 7a steigt an, und der Pflugbaum 1 schwenkt zunächst entgegen dem Druck der Feder 52 ein und dreht dann in die Totpunktlage - halbe Drehung. Der Schwerpunkt S wird dabei über die Drehwelle 4 gedreht. Danach drückt der Hydraulikzylinder 7a den Pflugbaum 1 in die nahezu senkrechte Lage, während die Anlenkung des Hydraulikzylinders 47 von ihrem Anschlag abhebt und in einem Langloch geführt wird. Die zweite Hälfte der Drehung erfolgt nach Absenkung des Pflugbaumes 1, wenn die Anlenkung des Hydraulikzylinders 47 wieder zum Anliegen kommt. Ein dem Hydraulikzylinder 47 vorgeschaltetes Drossel-Rückschlagventil bewirkt, daß der Hydraulikzylinder 7a nahezu drucklos wird und die Federkraft 52, unterstützt von dem über der Drehwelle 4 liegenden Schwerpunkt S, überwiegt und den Pflugbaum 1 weiterdreht und ausschwenkt.

Ein der Feder 52 gleichgeschalteter Dämpfungszylinder 53, der nur auf Druckkraft beansprucht dämpft, ermöglicht in der ersten Schwenk-Drehhälfte einen kontinuierlichen Übergang zwischen der Kipp- und der Drehbewegung. Eine ähnliche Wirkung ist zu erreichen, wenn die Kräfte und Anlenkungen der Feder 52, der Hydraulikzylinder 47 und 7a entsprechend ausgewogen sind bzw. die Größe des Pfluges dies zuläßt.

Hydraulische Schaltkombination

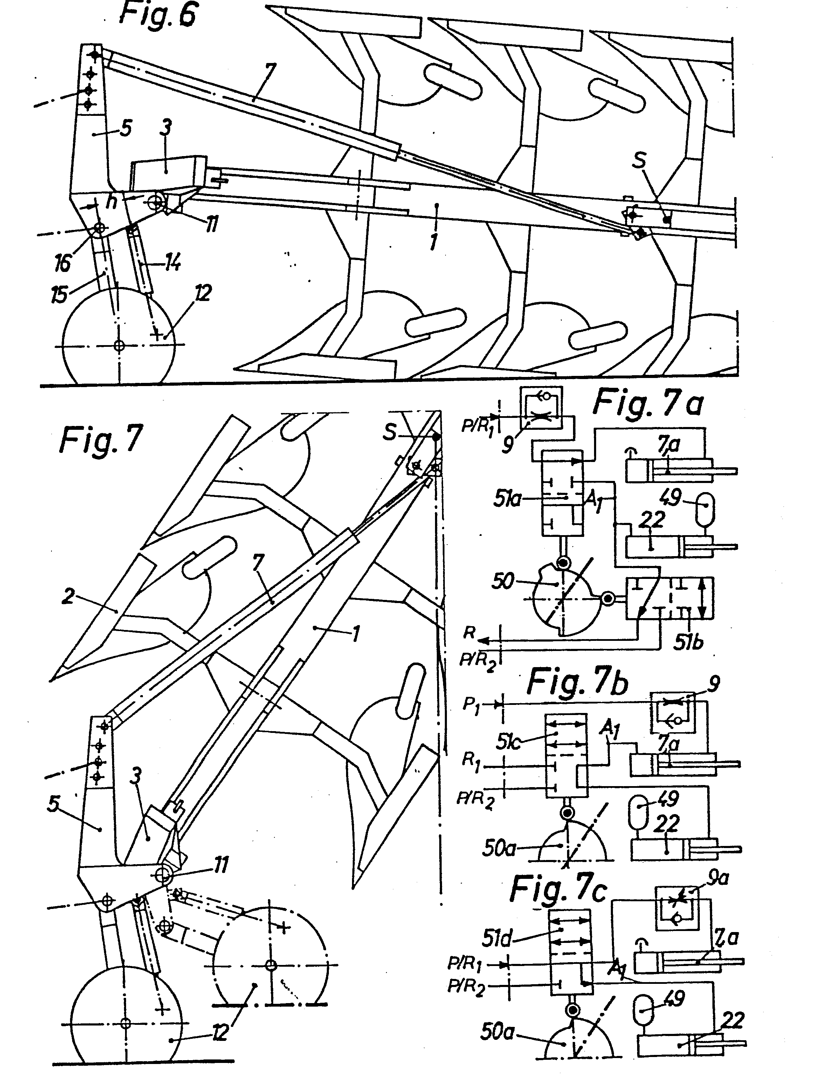

Bei der Kombination zwischen Kippeinrichtung und Schwenk-Drehvorrichtung soll einerseits die Schnittbreitenkorrektur des ersten Pflugkörpers 2 unabhängig von der Kippeinrichtung durchführbar und andererseits beim Hochkippen des Pflugbaumes 1 in die senkrechte Lage bzw. Abkippen in die Arbeitsstellung in einem Bedienungsvorgang gleichzeitig die notwendige Schwenk-Drehbewegung möglich sein. Dazu seien drei Beispiele der hydraulischen Schaltkombination Fig. 7 a, b und c bzw. Fig. 9 a, b und c anhand der Kipp- und Schwenk-Drehkombination nach Fig. 6 , 7 , 8⁻ und 9 beschrieben.

Der Pflugbaum 1 wird zunächst durch den Hydraulikzylinder 7 in eine Schräglage gekippt, daß die Scharspitze des oberen, ersten Pflugkörpers 2 den Schlepper noch nicht beschädigen kann. Danach ist die Um- oder Zuschaltung des Schwenk-Drehwerkes bis zur halben Drehung erforderlich. Die Dreh-Schwenkbewegung für die zweite Drehhälfte erfolgt nach dem Abkippen des Pflugbaumes 1 in gleicher oder ähnlicher Kippstellung.

Beispiel 1 (Fig. 7 a bzw. 9 a)

Hydraulikanschluß schlepperseitig mit zwei einfachwirkenden Steuerventilen und ein Rücklauf; Umschaltung der Hydraulik über zwei Zweiwegeventile:

Der Kippzylinder 7 ist auf Zug beaufschlagt und die Druckkraftseite entlüftet. Der Schwenk-Drehzylinder 22 ist an der Zugkraftseite an einem Hydro-Speicher 49 und die Druckkraft-seite über die Arbeitsleitung $A_1$ mit den Zweiwegeventilen 51a und b verbunden. In Arbeitsstellung des Pfluges ist der Kippzylinder 7 über das Zweiwegeventil 51a und der Leitung $P/R_1$ mit dem schlepperseitigen einfachwirkenden Steuerventil und der Schwenk-Drehzylinder 22 über das Zweiwegeventil 51b und der Leitung $P/R_2$ mit dem zweiten schlepperseitigen einfachwirkenden Steuerventil verbunden. Damit kann jeder Hydraulikzylinder 7 und 22 getrennt gesteuert werden. Das am Kippzylinder 7 angeschlossene schlepperseitige Steuerventil wird auf Zulauf geschaltet, während das zweite schlepperseitige Steuerventil in Sperrstellung steht. Eine mit der Kippbe-gung des Pflugkopfes 3 gekoppelten Schaltkulisse 50 schaltet die Zweiwegeventile.

Der Pflugbaum 1 wird hochgekippt, und nach der Umschaltung zur Schwenk-Drehbewegung steht das Zweiwegeventil 51a noch bzw. wieder in der normalen Arbeitsstellung,und der Kippvorgang geht weiter. Das Zweiwegeventil 51b dagegen hat umgeschaltet und gibt die mit dem Schwenk-Drehzylinder 22 verbundene Arbeitsleitung $A_1$ mit dem Rücklauf R frei. Der Schwenk-Drehzylinder 22 wird durch den Hydro-Speicher 49 eingezogen, und der Pflugbaum 1 dreht bis zur Totpunktlage und ist somit bis in die senkrechte Lage kippbar (Fig. 8 ).

Nach dem Öffnen des am Kippzylinder 7 angeschlossenen schlepperseitigen Steuerventils senkt sich der Pflugbaum 1 wieder, wobei ein zwischengeschaltetes Drosselrückschlagventil ein zu rasches Absinken verhindert. Nach ca. halb abgekipptem Pflugbaum 1 werden beide Zweiwegeventile 51a und 51b über die gekoppelte Schaltkulisse 50 umgeschaltet. Der Schwenk-Drehzylinder 22 ist jetzt über die Arbeitsleitung $A_1$ in dem Zweiwegeventil 51a in Schwimmstellung mit der Leitung $P/R_1$ - Schlepper mit Kippzylinder - verbunden und im Zweiwegeventil 51b in Sperrstellung, da das zweite schlepperseitige Steuerventil geschlossen ist. Nachdem in der Leitung $P/R_1$ das Drosselrückschlagventil 9 dem Zweiwegeventil 51a vorgeschaltet ist, wird der durch den Kippzylinder 7 erzeugte Druck in den Schwenk-Drehzylinder 22 umgeleitet, der gegen den Druck des Hydrospeichers 49 ausfährt und den Pflugbaum in seine Arbeitsstellung drückt. Die Senkgeschwindigkeit des Pflugbaumes 1 nimmt nach dem Drehvorgang wieder zu, weil wieder der volle Druck von dem Kippzylinder 7 auf das Drosselrückschlagventil 9 kommt. Nach weiterer Absenkung des Pflugbaumes 1 wird das Zweiwegeventil 51a wieder in die Arbeitsstellung zurückgeschaltet, und beide Zylinder sind wieder getrennt steuerbar.

Beispiel 2 (Fig. 7b  bzw. 9b )

Hydraulikanschluß schlepperseitig mit einem doppeltwirkenden und einem einfachwirkenden Steuerventil; Umschaltung über ein Zweiwegeventil:

Der Kippzylinder 7 ist auf der Zugkraftseite direkt mit einem Anschluß des schlepperseitigen, doppeltwirkenden Steuerventils verbunden, während die Druckkraftseite über das Zweiwegeventil 51c an dem zweiten Anschluß des genannten Schlepperventils angeschlossen ist. Dieser Anschluß hat für die Arbeitsstellung des Pfluges den Vorteil, daß bei Druckkraftbelastung des Kippzylinders 7 die Zugwiderstandskraft $P_z$ unter die Kippachse 11 verlagert werden kann.

Der Anschluß des Schwenk-   Zylinders 22 ist wie im Beispiel 1 beschrieben, mit dem Unterschied, daß dessen Anschlüsse an den Hydro-Speicher 49 und der Arbeitsleitung $A_1$ vertauscht sind.

Nach ca. halb hochgekipptem Pflugbaum 1 schaltet das Zweiwegeventil 51c um, und der Rücklauf des Kippzylinders 7 ist über die Arbeitsleitung $A_1$ in dem Zweiwegeventil 51c in Umlaufstellung mit der Zugkraftseite des Schwenk-Drehzylinders 22 verbunden. Die Schwenk-Drehbewegung erfolgt jetzt synchron der Kippbewegung.

Durch Öffnen der Leitung $P_1$ als Rücklauf $R_1$ senkt sich der Pflugbaum 1 und wird gleichzeitig durch den Hydro-Speicher 49 ebenfalls synchron zur Kippbewegung in die Arbeitsstellung gedrückt. Die Rückschaltung des Zweiwegeventils 51c erfolgt in der gleichen Kipplage wie beim Aufwärtskippen des Pflugbaumes 1. Beide Hydraulikzylinder 7 und 22 sind wieder getrennt steuerbar.

Das Drosselrückschlagventil 9 ist für diese hydraulische Schaltkombination nicht erforderlich, aber für den Ausgleich des Kipp-Schwungmomentes verwendbar.

Beispiel 3 (Fig. 7c bzw. 9c)

Hydraulikanschluß schlepperseitig mit zwei einfachwirkenden Steuerventilen; Umschaltung der Hydraulik über ein Zweigeventil:

Der Anschluß des Kippzylinders 7 in Arbeitsstellung des Pfluges ist wie im Beispiel 1, mit dem Unterschied, daß das Drosselrückschlagventil 9a dem Kippzylinder 7 und dem Zweiwegeventil 51d zwischengeschaltet ist. Der Schwenk-Drehzylinder 22 ist wie im Beispiel 2 angeschlossen. Nachdem das Zweiwegeventil 51d nach ca. halb hochgekipptem Pflugbaum 1 über die Schaltkulisse 50a umgeschaltet hat, ist die mit dem Schwenk-Drehzylinder 22 verbundene Arbeitsleitung $A_1$ im Zweiwegeventil 51d in Schwimmstellung mit der Zuleitung $P/R_1$ zum Kippzylinder 7. Die Widerstandskraft im Schwenk-Drehzylinder 22 ist erwartungsgemäß kleiner als im Kippzylinder 7, so daß das Rückschlagventil im Drosselrückschlagventil 9a schließt und der Pflugbaum 1 nahezu stehen bleibt, während der Ölstrom von $P/R_1$ in den Schwenk-Drehzylinder 22 umgelenkt wird und dieser den Pflugbaum 1 in die Totpunktlage dreht. Durch den ansteigenden Druck in dem Hydro-Speicher 49 während des ersten Drehvorganges steigt auch der Druck in der Arbeitsleitung $A_1$ und somit in der Zuleitung zum Kippzylinder 7, so daß der Pflugbaum 1 gleichzeitig wieder langsam nach oben weiterkippt.

Nach Öffnen der Leitung $P/R_1$ als Rücklauf beginnt sich der Pflugbaum 1 wieder zu senken. Durch das Drosselrückschlagventil 9a, das dem Zweiwegeventil 51d vorgeschaltet ist, wird die Rücklaufleitung $P/R_1$ und somit die Arbeitsleitung $A_1$ nahezu drucklos, so daß der Hydro-Speicher 49 den Pflugbaum 1 gleichzeitig in seine Arbeitsstellung weiterdrehen kann. Es ist bei dieser Schaltkombination eine relativ genaue Drosseleinstellung im Drosselrückschlagventil 9a erforderlich, damit die Drehung des Pflugbaumes 1 vor dem Umschalten des Zweiwegeventils 51d in die Arbeitsstellung des Pflugbaumes 1 abgeschlossen ist bzw. die Drehung gegenüber dem Kippweg nicht zu schnell geht, um Beschädigungen am Schlepper zu vermeiden. Aus diesem Grund ist es zweckmäßig, die Drossel einstellbar auszubilden.

Bei allen drei hydraulischen Schaltkombinationen kann an dem Schwenk-Drehzylinder 22 anstatt des Hydro-Speichers 49 ein direkter Anschluß am Schlepper erfolgen. Hierzu ist allerdings schlepperseitig ein doppeltwirkendes Steuerventil notwendig.

Die für die hydraulische Schaltkombination erforderlichen Drosselrückschlagventile 9, a sind gleichzeitig als Ausgleich des Kippmomentes wirksam.

Die Schaltkombinationen sind selbstverständlich anstatt den beschriebenen Schwenk-Drehwerkeinheiten auch mit entsprechenden Drehantriebseinheiten bekannter Art kombinierbar, wobei diese Drehantriebseinheiten zweckmäßigerweise im kippbaren Pflugteil (z.B. liegend) angeordnet sein müßten (nicht dargestellt).

Kippeinrichtung, Kippausgleich:

Die Kippeinrichtung des Pflugbaumes 1 kann entweder nach bekannter Art über einen Hydraulikzylinder 58, der anstatt des Oberlenkers eingesetzt ist, oder über einen als Abstützvorrichtung verwendeten Hydraulikzylinder 7, a oder 10, a oder 47 in Verbindung mit einem Kipplager 11 oder 16 zwischen Pflugbock 5 und Pflugkopf 3 erreicht werden.

Durch die Kippeinrichtung kann der Anbaupflug am Feldende schräg ausgefahren und wieder schräg eingesetzt werden (Fig. 5 und 8). Dies hat den Vorteil, daß speziell bei längeren Anbaupflügen durch das einzelne Aus- und Einfahren der Pflugschare der Furchenanschnitt gleichmäßiger und somit das Pflügen des Vorfeldes leichter und sauberer wird. Das schräge Einsetzen des Anbaupfluges ermöglicht außerdem ein rasches Eindringen der Pflugkörper 2 auf ihre Sollarbeitstiefe, da durch das schräge Anstellen der Pflugkörper 2 die Einzugskraft wesentlich erhöht wird, was sich bei schweren Böden besonders vorteilhaft auswirkt.

Die Kippeinrichtung ist gleichzeitig als Kippausgleich des eingesetzten Anbaupfluges bei welligen Böden verwendbar. Al-

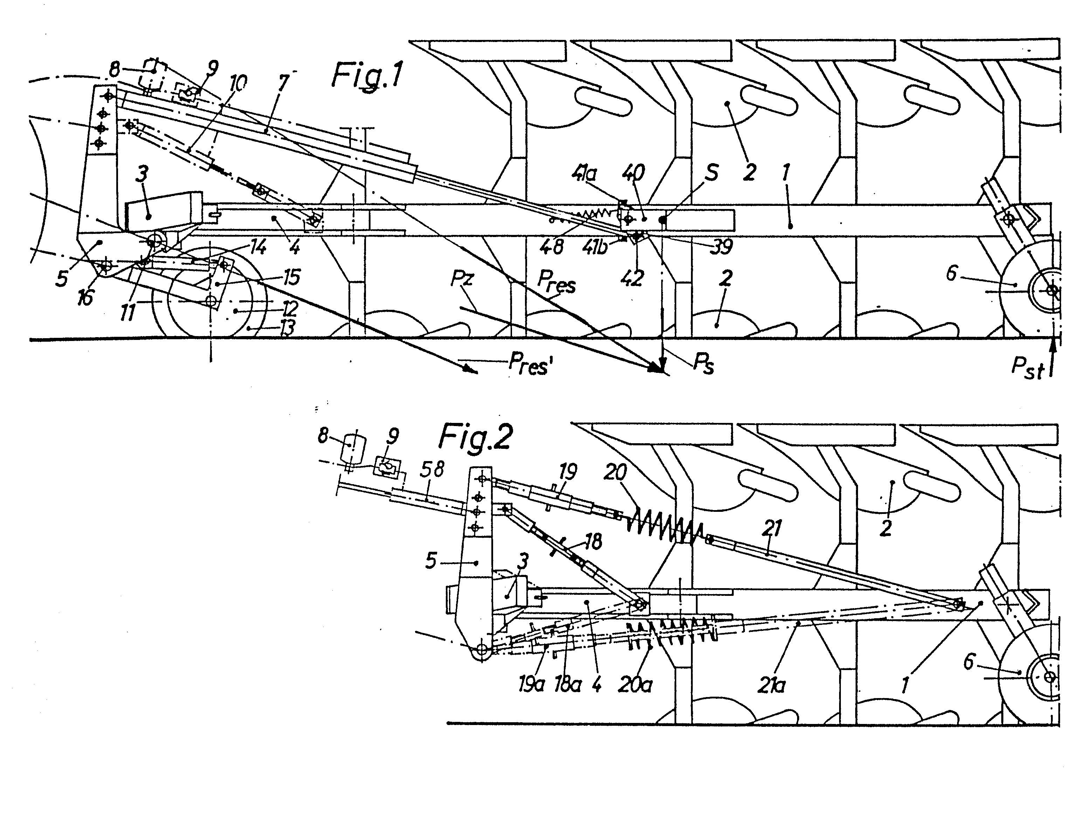

lerdings muß der Hydraulikzylinder 7, a;/47 oder 58 bei direktem Anschluß an den Schlepper ständig über dessen Steuerventil nachreguliert werden, außer es wird in Schwimmstellung gefahren, was zur Folge hat, daß die Zugwiderstandskraft $P_{res}$, stets durch das Kipplager 11 oder 16 verläuft (Fig. 1). Die auf den Schlepper zu übertragende Tragkraft wird dabei allerdings relativ klein und wirkt sich bei kleinen oder mittellangen Anbaupflügen nachteilig aus, weil die Zugkraftübertragung des Schleppers auf den Boden nicht optimal ausgenutzt werden kann.

Dieser Nachteil wird erfindungsgemäß ausgeschaltet, wenn den Kippzylindern 7, a; 10, a; 47 oder 58 ein Hydrospeicher 8 vorgeschaltet wird. Dadurch ist die auf den Schlepper zu übertragende Tragkraft vom Maximum bis zum Minimum exakt einstellbar. Das Maximum wird erreicht, wenn der Hydrospeicher 8 über das schlepperseitige Steuerventil soweit vorgespannt wird, bis die Auflagekraft $P_{St}$ am Stützrad 6 den Wert 0 erreicht. Das Minimum ist dann notwendig, wenn der Anbaupflug über Steinplatten gezogen wird, die im Niveau so hoch liegen, daß nahezu keine natürliche Seitenführung des Anbaupfluges vorhanden ist. Bei der geringsten Bodenunebenheit wird deshalb ein Anbaupflug ohne Kippausgleich entweder vorne oder hinten etwas herausgekippt, so daß die Seitenführungsanlagen an den Pflugkörpern 2 dem Seitendruck nicht mehr standhalten und der Pflug in das ungepflügte Land rutscht. Eine saubere Pflugarbeit ist aus diesem Grund nicht mehr möglich. Die gleiche Gefahr des seitlichen Abrutschens ist auch beim Schälpflügen gegeben. Deshalb ist eine gute Anpassung an Bodenunebenheiten speziell bei längeren Anbaupflügen vorteilhaft bzw. notwendig, um solche Pflugarbeiten überhaupt durchführen zu können. Neben der Tragkrafteinstellung ist über den Hydro-Speicher 8 gleichzeitig der Kippausgleich möglich, da das durch die Kippbewegung des Pflugbaumes 1 verdrängte Öl der Hydraulikzylinder 7, a; 10, a; 47 oder 58 von dem Hydro-Speicher 8 aufgenommen bzw. abgegeben wird. Damit wird die Wirkung und somit der Vorteil von Aufsattelpflügen erreicht, mit dem zusätzlichen Vorteil, daß die auf
den Schlepper zu übertragende Tragkraft während der Pflugarbeit eingestellt werden kann. Der Kippausgleich vermeidet
außerdem ein Aufbäumen oder Eingraben der Räder des Schleppers, da der Anbaupflug durch die Hubhydraulik des Schleppers
nur vorne angehoben wird,so daß die Übertragungskraft auf
den Schlepper nahezu konstant bleibt.

Das Drosselrückschlagventil 9 bzw. 9a in Verbindung mit dem
Hydrospeicher 8 und der Kippeinrichtung bzw. Kippausgleich
verhindert, daß beim Überfahren von Bodenunebenheiten
Schwungmomente des ausgehobenen Anbaupfluges auf den Schlepper übertragen werden.


Die Erfindung und deren Kombinationen wurden in erster Linie
anhand von Drehpflügen beschrieben. Ein Teil ist jedoch auch
an Beetpflügen (Einwegpflüge) mit den gleichen Vorteilen
anwendbar.

Patentansprüche

1. Drehpflug mit einem einen Pflugkopf (3) und einem Pflugbock (5) aufweisenden Pflugvordergestell, einem drehbaren
Pflugteil mit einer Wendewelle (4) und einem um die Wendewelle drehbar gelagerter Pflugbaum (1) und einer Abstützvorrichtung mit einem Verbindungselement (7,7a; 10,10a; 18,18a;
19,19a; 20,20a; 21,21a) zur Abstützung des Pflugbaumes (1),
dadurch gekennzeichnet, daß entweder bei einer starren Verbindung zwischen Pflugbock (5) und Pflugkopf (3) zwischen
Pflugbock (5) und Pflugkopf (3) das Verbindungselement (7,7a;
19,19a; 20,20a; 21,21a) mit einem Kraftspeicher (20, 20a)
oder einem Kraftantrieb (10,10a), die in Richtung der Längsachse des Verbindungselementes (7,7a; 10,10a; 20,20a; 21,21a)
wirken, vorgesehen ist, oder daß ein Kipplager (11) waagrecht
und quer zur Achse der Wendewelle (4) zwischen Pflugbock (5)
und Pflugbaum (1) und das Verbindungselement (7,7a; 10,10a;
20,20a; 21,21a; 47) zwischen dem Pflugbock (5) und dem aus
Pflugkopf (3), Wendewelle (4) und Pflugbaum (1) bestehenden
kippbaren Pflugteil vorgesehen ist.

2. Drehpflug nach Anspruch 1 ,
dadurch gekennzeichnet, daß das Verbindungselement als ein
hydraulischer Zylinder (7,7a; 10,10a; 47) ausgebildet ist.

3. Drehpflug nach Anspruch 2 ,
dadurch gekennzeichnet, daß dem Kippzylinder (7,7a; 10,10a;
47) bzw. einem Kippzylinder (58) zwischen Pflugbock (5) und
Schlepper ein Hydro-Speicher (8) und/oder ein Drosselrückschlagventil (9,9a) vorgeschaltet ist.

4. Drehpflug nach einem der Ansprüche 1 bis 3,
dadurch gekennzeichnet, daß von der Kippbewegung des Pflugkopfes (3) und Pflugbaumes (1) oder des hydraulischen Kippzylinders (7,7a; 10,10a; 47) oder von dem Hubweg des Kippzylinders abhängig in Aufwärtsrichtung des Pflugbaumes (1)
nach einem gewissen Kipp- oder Hubweg über ein mechanisch oder hydraulisch zu betätigender Auslösemechanismus (44)
eine Dreharretierung (45) des Pflugbaumes (1) freigegeben
wird und in Abwärtsrichtung des Pflugbaumes (1) nach einem
gewissen Kipp- oder Hubweg sich der Pflugkopf (3) an einem
Anschlag (46) oder einem zweiten hydraulischen Kippzylinder
(47) abstützt, und daß ein Drosselrückschlagventil (9) dem
zweiten Kippzylinder (47) vorgeschaltet und der Zuleitung
vom Schlepper zum Kippzylinder (7,7a) parallelgeschaltet
vorgesehen ist.

5. Drehpflug nach einem der Ansprüche 1 bis 4, dadurch
gekennzeichnet, daß das Verbindungselement (7,7a; 19,19a;
20,20a; 21,21a) mit dem Pflugbaum (1) über einen Zwischenhebel
(39) verbunden ist, der am Pflugbaum (1) mit einer quer zur
Richtung des Verbindungselements (7,7a; 19,19a; 20,20a; 21,
21a) angeordneten Lagerachse schwenkbar angelenkt ist.

6. Drehpflug nach einem der Ansprüche 1 bis 4, dadurch gekennzeichnet, daß das Verbindungselement (7,7a; 19,19a; 20,
20a; 21,21a) am Pflugbaum (1) in einem Anlenkpunkt (42) angelenkt ist, der in einem Langloch (43) geführt ist, welches
entweder kreisförmig oder an seinen Enden mit querlaufenden
Auskragungen ausgebildet ist.

Fig.1

Fig.2

0139305

Fig. 3

Fig.4

7

4

3

1

S

5

Fig.5b

43

40

42

Fig.5a

43

40

42

Fig.5

3

1

41a

S

7

5

41b

39

C139305

Fig.6

Fig.7

Fig. 7a

Fig.7b

Fig.7c

0139305

*Fig.9a*

49 — 22 — 7a — 9 — R/P₁ — A₁ — 51a — 51b — 50 — R — P/R₂

*Fig.9b*

9 — R₁ — P₁ — P/R₂ — 7a — 22 — 49 — A₁ — 51 — 50a

*Fig.9c*

9a — 51a — 7a — R/P₁ — P/R₂ — 22 — 49 — A₁ — 50a

*Fig.9*

S — 39 — 41a — 48 — 7 — 5 — 3 — 1 — 12

*Fig.8*

1 — 7 — 5 — 3 — 12 — X₅

## Fig.11

## Fig.10

## Fig.10a

Fig. 13

Fig. 12

Fig. 12a

5

46b

46a

45b    4    3    .45a

1

S

7

5

46

45

4

3

59

$Y_S$

$X_S$

10

8

A

6

B

4

2

0

30    60    90

7/8

0139305

Fig.14

Fig.15

Fig.16

Fig.14a

Fig.14b

Fig.17

Fig.18